# EUROPEAN PATENT APPLICATION

(11) **EP 2 790 139 A1**
(43) Date of publication of application: **15.10.2014**
(21) Application number: 14163678.7
(22) Date of filing: 07.04.2014
(51) Int. Cl.: G06Q 10/06, A01K 11/00

(54) **Assessment of dog's working performance**

(30) Priority: 12.04.2013 FI 20135355
(71) Applicant: OTA Systems Oy, 90250 Oulu (FI)
(72) Inventor: Maansaari, Jari, 90250 Oulu (FI)
(74) Representative: Kolster Oy Ab

(57) **Abstract**

Assessment of dog's working performance is disclosed. Dog information gathered by tracking apparatus attached to dog during assessment of dog is received (402). Dog information includes plurality of geographical positions of tracking apparatus timestamped with tracker timestamps. Observer information inputted by human observer into mobile apparatus during assessment of dog is received (404). Observer information includes plurality observations timestamped with observer timestamps. Tracker timestamps and observer timestamps are synchronized to common chronological timeline. Assessment result is produced (406) by analysing dog information and observer information. Assessment result describes working performance of dog.

## Description

### Field

The invention relates to an assessment of dog's working performance.

### Background

A dog may help man in many different pursuits, such as in hunting. The working performance of the dog may be assessed with various tests developed for just that purpose. The assessment is quite demanding and it requires great skill and experience. Accordingly, a tool for the assessment is desirable.

### Brief description

The present invention seeks to provide an improved computing resource, an improved computer program code, and an improved method for the assessment.

According to an aspect of the present invention, there is provided an apparatus as specified in claim 1.

According to another aspect of the present invention, there is provided a computer readable-medium as specified in claim 10.

According to another aspect of the present invention, there is provided a method as specified in claim 11.

### List of drawings

Example embodiments of the present invention are described below, by way of example only, with reference to the accompanying drawings, in which
Figure 1 illustrates an example embodiment of a general operating environment;
Figure 2 illustrates an example embodiment of a computing resource;
Figure 3 illustrates an example embodiment of an assessment framework;
Figure 4 is a flow-chart illustrating an example embodiment of a method; and
Figure 5, 6, 7, 8, 9, 10 and 11 illustrate example embodiments of an assessment.

### Description of embodiments

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

It should be noted that while Figures illustrate various embodiments of apparatuses, they are simplified block diagrams that only show some structures and functional entities. The connections shown in these Figures are logical connections; the actual physical connections may be different. Interfaces between the various elements may be implemented with suitable interface technologies, such as a message interface, a method interface, a sub-routine call interface, a block interface, or any hardware/software means enabling communication between functional sub-units. It is apparent to a person skilled in the art that the described apparatuses may also comprise other functions and structures. It should be appreciated that details of some functions, structures, and the protocols used for communication are irrelevant to the actual invention. Therefore, they need not be discussed in more detail here. Although the apparatuses have been depicted as separate single entities, different parts may be implemented in one or more physical or logical entities.

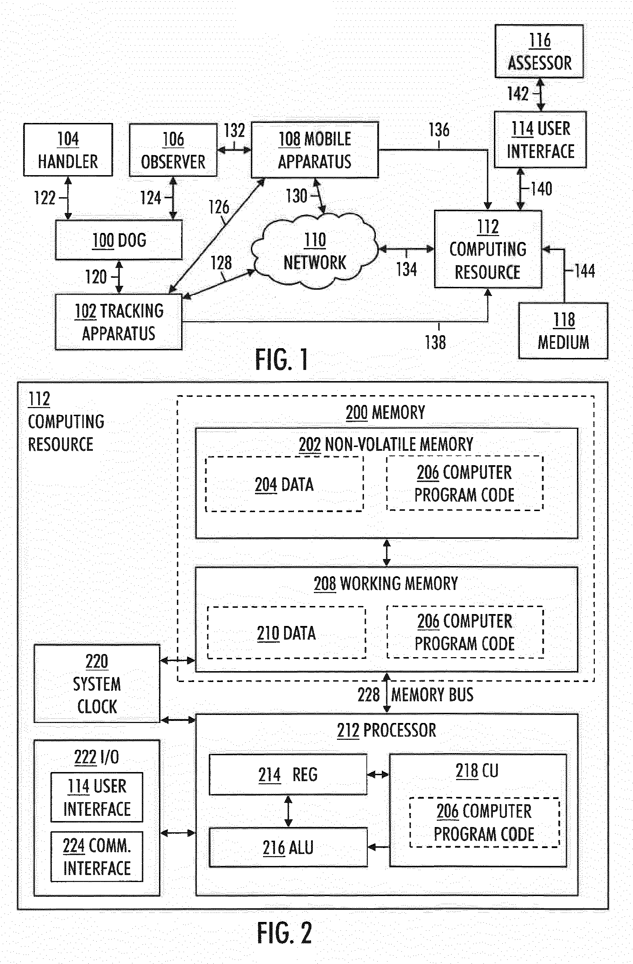

Figure 1 illustrates an example embodiment of a general operating environment. With this kind of environment, a new way of assessing a working performance of a dog 100 may be implemented. In an example embodiment, the assessment is implemented as a practical test such as a hunt/chase test for a hunting dog.

A tracking apparatus 102 is attached 120 to the dog 100. In an example embodiment, the tracking apparatus 102 is a tracking collar. The tracking apparatus 102 may be similar to those developed and sold by Ultracom Oy, and described in Ultracom's Finnish patent applications 20116147, 2116246, and 20116272.

During an assessment, the dog 100 is handled 122 by a handler 104 and observed 124 by at least one observer 106. The dog handler 104 may be a professional dog handler or a hobby dog handler such as a hunter, for example. The observer 106 may be a person certified by an assessment organization such as a judge/referee of a hunting dog organization. In Finland, such organizations include various breed or game specific organizations such as Finnish Hound, hound or moose dog organizations, for example.

During the assessment, the tracking apparatus 102 collects information. Besides this, the observer (or a plurality of observers) 106 manipulates 132 a mobile apparatus (or a plurality of mobile apparatuses) 108 in order to collect further information relating to the assessment.

As is shown in Figure 1, the tracking apparatus 102 and the mobile apparatus 108 may transfer the information to a computing resource 112 in two different ways: either as wireless data 128, 130 134 through a network 110 such as cellular radio network, or as wired/wireless data 136, 138 through a wired/wireless connection such as USB (Universal Serial Bus) or Bluetooth or by a memory component such as a USB flash.

Furthermore, the tracking apparatus 102 may also transmit wireless information 126 to the mobile apparatus, 108, which, in turn, transmits both the information received from the tracking apparatus 102 and the information inputted 132 by the observer 106 to the computing resource 112. This example embodiment may require that the mobile apparatus 108 is interoperable with the tracking apparatus 102. Note that the described relay function may also be realized by a mobile apparatus (not described in Figure 1) handled by the handler 104.

In an example embodiment, the mobile apparatus 108 may be a mobile phone, a smartphone, a tablet computer, or a general-purpose mobile computing device. In an example embodiment, the mobile apparatus 108 is a general-purpose off-the-shelf computing device, as opposed to a purpose-build proprietary equipment, whereby research & development costs will be lower as only the special-purpose software (and not the hardware) needs to be designed, implemented and tested. In an example embodiment, the mobile apparatus 108 is a smartphone or a tablet employing a multi-touch display. Such devices may employ a suitable operating system such as iOS, Android, or Windows Phone, for example.

In an example embodiment, Ultracom's Ultrapoint Koira-GPS is the tracking apparatus 102 and Ultracom's Ultrapoint DoGPS as the software in a smartphone implements a mobile apparatus (for the handler 104). The mobile apparatus 108 for the observer 106 may be based on the handler's 104 mobile apparatus, or it may be developed independently.

In an example embodiment, the tracking apparatus 102 includes a wireless transceiver interoperable with various wireless standard/non-standard/proprietary communication networks such as any mobile phone network, regardless of the generation (such as 2G, 3G, 4G, beyond 4G, etc.) such as GSM (Global System for Mobile Communications), GPRS (General Packet Radio Service), EGPRS (Enhanced GPRS), WCDMA (Wideband Code Division Multiple Access), UMTS (Universal Mobile Telephone System), 3GPP (The 3rd Generation Partnership Project), IMT (International Mobile Telecommunication), LTE (Long Term Evolution, LTE-A (LTE-Advanced), and other radio systems (in their present forms and/or in their evolution forms), such as WLAN (Wireless Local Area Network) based on IEEE (Institute of Electrical and Electronics Engineers) 802.11 standard or its evolution versions (IEEE 802.11ac etc.), WiMAX (Worldwide Interoperability for Microwave Access, or Wi-Fi, for example. Alternatively, or additionally, the tracking apparatus 102 may include a wireless transmitter or transceiver operating on a proprietary bandwidth such as a bandwidth especially reserved for tracking apparatuses 102 used in hunting: 433 MHz or 155 MHz in Finland, for example.

In an example embodiment, the computing resource 112 may be a computer, a server computer, a cluster of computers, a computing cloud, a centralized computing resource, a distributed computing resource, or a part of the mobile apparatus 108. Naturally, besides these example embodiments of the computing resource 112, other feasible computing architectures may be utilized as well to implement the hardware and software of the computing resource 112.

As illustrated in Figure 2, the computing resource 112 comprises a data communication interface 224, one or more processors 212, and one or more memories 200 including computer program code 206.

As was explained earlier, the data communication interface 224 includes various ways of importing data: any wired or wireless interface such as USB or Bluetooth, for example. If the mobile apparatus 108 and the computing resource 112 are implemented within the same device, the data communication interface 224 may include a suitable internal communication mechanism.

In an example embodiment, the term 'processor' 212 refers to a physical device that is capable of processing data in a computer or other digital electronic device. Depending on the processing power needed, the computing resource 112 may each comprise several processors 212 such as parallel processors or one or more multicore processors. A non-exhaustive list of implementation techniques for the processor 212 includes, but is not limited to: logic components, standard integrated circuits, application-specific integrated circuits (ASIC), system-on-a-chip (SoC), application-specific standard products (ASSP), microprocessors, digital signal processors, special-purpose computer chips, and field-programmable gate arrays (FPGA).

In an example embodiment, the term 'memory' 200 refers to a physical device that is capable of storing the computer program code 206 and data 204, 210 on a temporary or permanent basis for use in a computer or other digital electronic device. In an example embodiment, the term 'memory' refers to working memory (also known as primary storage, main memory or internal storage) directly accessible to the processor 212. In an example embodiment, the working memory may be implemented as a random-access memory (RAM), such as a dynamic RAM, DRAM.

In an example embodiment, the computing resource 112 may include an electronic digital computer, which may comprise a non-volatile memory 202 and a working memory 208 as the memory 200, the processor 212, a system clock 220 and an input/output 222 including a user interface 114 and the data communication interface 224. Naturally, the computer may comprise a number of other peripheral devices, not illustrated here for the sake of clarity. Also, the architecture of Figure 2 is just one example embodiment as other feasible computing architectures may be utilized as well to implement the hardware and software of the computing resource 112. It is also to be noted that the architecture of Figure 2 may be applied as well, changing those things which need to be changed, to the implementation of the mobile apparatus 108 as a single computer.

In an example embodiment, the system clock 220 constantly generates a stream of electrical pulses, which cause the various transferring operations within the computer to take place in an orderly manner and with specific timing.

In an example embodiment, the processor 212 may be implemented as a microprocessor implementing functions of a central processing unit (CPU) on an integrated circuit. The CPU 212 is a logic machine executing the computer program code 206. The computer program code 206 may be coded as a computer program using a programming language, which may be a high-level programming language, such as C, C++, or Java, or a low-level programming language, such as a machine language, or an assembler. There are many ways to structure the computer program code 206. In an example embodiment, the operations of the computer program code 206 may be divided into functional modules, sub-routines, methods, classes, objects, applets, macros, etc., depending on the software design methodology and the programming language used. In modern programming environments, there are software libraries, i.e. compilations of ready-made functions, which may be utilized by the computer program code 206 for performing a wide variety of standard operations.

The CPU 212 may comprise a set of registers 214, an arithmetic logic unit (ALU) 216, and a control unit (CU) 218. The control unit 218 is controlled by the computer program code 206 transferred to the CPU 212 from the working memory 208. The working memory 208 is directly or indirectly connected to the CPU 212 via a memory bus 228 including two buses: an address bus and a data bus. The CPU 212 sends a memory address indicating the desired location of data 210 or computer program code 206 through the address bus, whereupon the CPU 212 reads or writes the data itself from/to the working memory 208 using the data bus.

The control unit 218 may contain a number of microinstructions for basic operations. The implementation of the microinstructions may vary, depending on the CPU design. The microprocessor 212 may also have an operating system (such as a general-purpose operating system), which may provide the computer program code 206 with system services. During running of the computer program code 206, the computer program code 206 or a part of it are transferred via the memory bus 228 from the working memory 208 into the control unit 218, wherein usually a portion of the computer program code 206 resides and controls the operation.

In an example embodiment, the non-volatile memory 202 retains the stored information even when not powered. Examples of non-volatile memory include read-only memory (ROM), flash memory, magnetic computer storage devices such as hard disk drives, and optical discs. As is shown in Figure 2, the non-volatile memory 202 may store both data 204 and the computer program code 206.

An example embodiment, illustrated in Figure 1, provides a computer-readable medium 118 comprising the computer program code 206. Said computer program code 206, when executed on the computing resource 112, causes the computing resource 112 to perform the operations required to implement the described example embodiments. In an example embodiment, the computer program code 206 may be in source code form, object code form, or in some intermediate form. The computer-readable medium may comprise at least the following: any entity or device capable of carrying 144 computer program code 206 to the computing resource 112, a record medium, a computer memory, a read-only memory, an electrical carrier signal, a telecommunications signal, and a software distribution medium. In some jurisdictions, depending on the legislation and the patent practice, the computer-readable medium 118 may not be the telecommunications signal. In an example embodiment, the computer-readable medium 118 may be a non-transitory computer readable storage medium.

The one or more memories 200 and the computer program code 206 are configured to, with the one or more processors 212, cause the computing resource 112 to receive 134, 138, from the tracking apparatus 102 attachable 120 to the dog 100, with the data communication interface 224, dog information gathered during an assessment of the dog 100, the dog information including a plurality of geographical positions of the tracking apparatus 102 timestamped with tracker timestamps. In an example embodiment, the tracking apparatus 102 includes a receiver for a Global Navigation Satellite System (GNSS) such as GPS (Global Positioning System) of the USA, Galileo of the European Union, GLONASS of Russia, Beidou of China, or IRNSS of India. Besides GNSS, or instead if GNSS, other location techniques may be utilizes as well such as those developed for use in cellular radio networks.

Furthermore, the one or more memories 200 and the computer program code 206 are configured to, with the one or more processors 212, cause the computing resource 112 to receive 134, 136, from the mobile apparatus 108 usable 132 by the human observer 106, with the data communication interface 224, observer information inputted 132 by the human observer 106 during the assessment of the dog 100, the observer information including a plurality observations timestamped with observer timestamps.

The tracker timestamps and the observer timestamps are synchronized to a common chronological timeline. This ensures that the chronological order of the events may be reliably observed. One simple way of achieving this is that both the tracking apparatus 102 and the mobile apparatus 108 each run clocks that are synchronized to a common timeline. In Finland, the common timeline is the standard time zone UTC+02:00, for example.

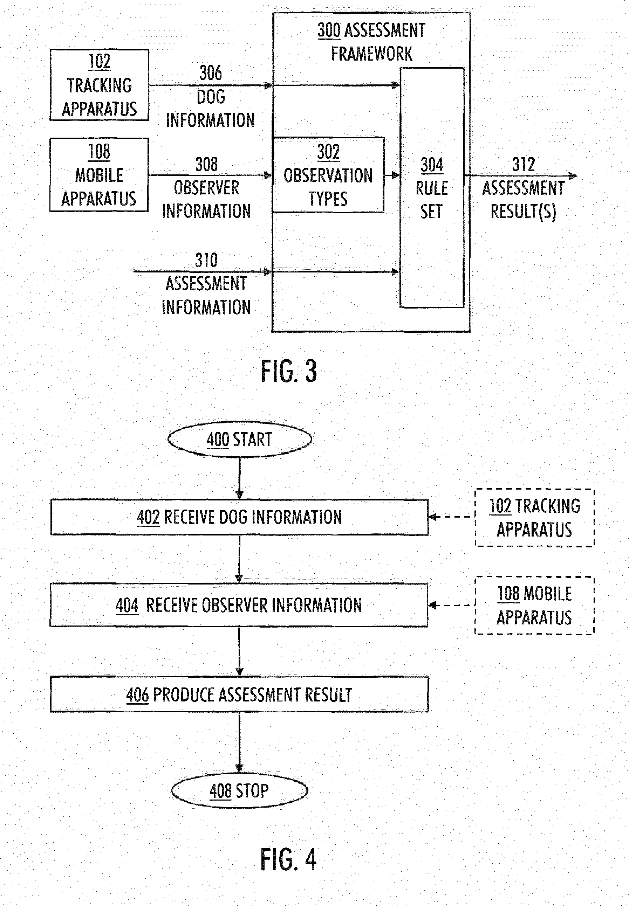

The one or more memories 200 and the computer program code 206 are configured to, with the one or more processors 212, cause the computing resource 112 to produce an assessment result by analysing the dog information and the observer information, the assessment result describing the working performance of the dog 100. Figure 3 further illustrates this. An assessment framework 300, run in the computing resource 112, receives the dog information 306 from the tracking apparatus 102 and the observer information 308 from the mobile apparatus 108.

The dog information 306 is gathered during the assessment of the dog 100 by the tracking apparatus 102 worn by the dog 100. As was explained, the dog information 306 includes a plurality of geographical positions of the tracking apparatus 102 timestamped with tracker timestamps. This may be implemented such that the dog information 306 includes timestamped series of data items collected at any given interval (for example once a minute) providing enough data for the reliable assessment. Each collected data item may include (but is not limited to) at least some of the following properties: timestamp, geographical position (for example in WGS84 coordinates) of the tracking apparatus 102, speed of the tracking apparatus 102, and barking information.

The observer information 308 is inputted 132 by the human observer 106 during the assessment of the dog 100. As was explained, the observer information 308 may include a plurality observations timestamped with observer timestamps. The observer information 308 is data submitted by the observer(s) to support the dog information 306 and provide additional information regarding the behaviour of the dog 100 during the assessment. Furthermore, each observation may include a geographical position of the mobile apparatus 108 at the time the observation was inputted 132 by the observer 106. Consequently, the mobile apparatus 108 may include means (a GNSS receiver, for example) for determining its geographical position.

In an example embodiment, the observer information 308 may be categorized to a plurality of different observation types 302. Accordingly, the observation may include an observation type selected from a set of predetermined observation types. The availability of various observation types 302 may be defined by the selected assessment framework 300. One observation data item may include a timestamp of the observation, observation type and optional parameters describing the observation. The observation type 302 may define a specific type of event used for calculating the assessment result. Typical observation types 302 may be "DOG_IS_LEASHABLE" indicating that the dog handler 104 had an opportunity to leash the dog 100, and "SEARCHROUND_COMPLETE" indicating that the dog 100 returns back from a search round and this information may be used to calculate the distance of the search round.

In an example embodiment, assessment information 310 may be inputted to the assessment framework 300, either with a user interface 114 coupled 140 with the computing resource 112, or with the mobile apparatus 108. The assessment information 310 may include data about the performed assessment itself such as information about the used assessment framework 300, date, time and place of the assessment, observer 106 identification, information regarding the assessed dog 100 (breed, sex, age, registration number etc.), and environmental conditions such as the weather.

In an example embodiment, the assessment framework 300 may include the set of observation types 302 available during the assessment and a rule set 304 for producing the assessment result(s) 312 by analysing the dog information 306 and the observer information 308. In an example embodiment, the observation includes structured data with predetermined data elements.

In an example embodiment, the assessment result(s) 312 provide calculated performance measures and indicators describing the performance of the assessed dog 100. The assessment results 312 may be stored in an assessment repository together with the assessment information 310 for a comparative analysis. The assessment results 312 may be used for dog breeding decisions as the assessment results 312 between different dog individuals 100 may be compared, in order to find the best hunting bloodlines, for example.

National and international breed organisations have years developed rules and criteria to evaluate the performance of the working dogs 100. These rules may form a basis for developing the assessment framework 300. In an example embodiment, the one or more memories 200 and the computer program code 206 are configured to, with the one or more processors 212, cause the computing resource 112 to, in order to produce the assessment result 312, analyse the dog information 306 and the observer information 308 utilizing at least one rule selected from the set 304 of the predetermined rules on the basis of the observation type 302.

Next, example embodiments of a method will be described with reference to Figure 4. Other functions, not described in this application, may also be executed between the operations or within the operations. Some of the operations or parts of the operations may also be left out or replaced by a corresponding operation or part of the operation.

The method starts in 400.

In 402, dog information gathered by the tracking apparatus 102 attached to a dog during an assessment of the dog 100 is received, the dog information including a plurality of geographical positions of the tracking apparatus timestamped with tracker timestamps.

In 404, observer information inputted by a human observer into the mobile apparatus 108 during the assessment of the dog 100 is received, the observer information including a plurality observations timestamped with observer timestamps, wherein the tracker timestamps and the observer timestamps are synchronized to a common chronological timeline.

In 406, an assessment result is produced by analysing the dog information and the observer information, the assessment result describing a working performance of the dog.

The method ends in 408.

The example embodiments of the earlier described tracking apparatus 102, mobile apparatus 108 and computing resource 112 may be used to enhance the method. In an example embodiment, the method may be computer-implemented, run in the computing resource 112, for example.

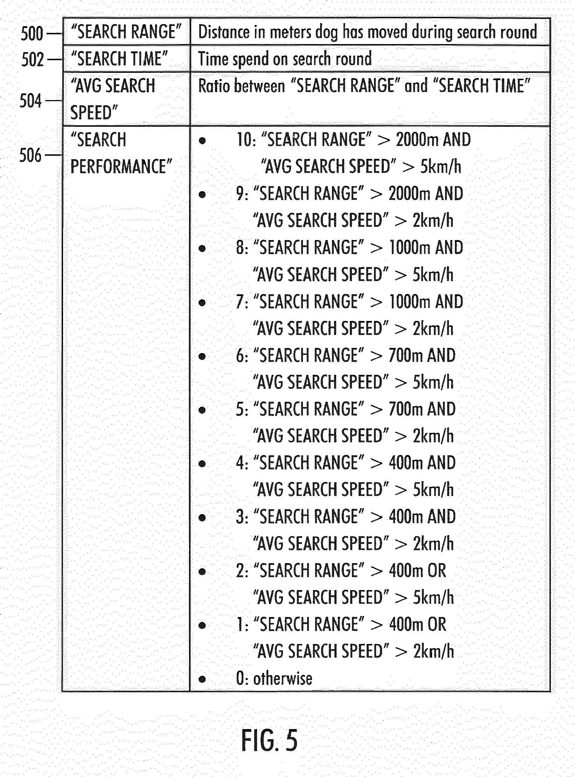

Now that the equipment has been described, let us study an elaborate example embodiment and present some further example embodiments with reference to Figures 5, 6, 7, 8, 9, 10 and 11.

The assessment is directed to a moose dog, i.e., a working dog used to hunt moose in Finland. Accordingly, the assessment framework 300 is developed to assess the performance of the dog 100 on working with moose in Finland.

The assessment framework 300 may be designed to produce performance indicators on three important aspects of the dog 100 working with moose:
1) "SEARCH PERFORMANCE": Defined as the ability of the dog 100 to run long search rounds to locate a moose.
2) "MOOSEFINDING PERFORMANCE": Defined as the ability of the dog 100 to find a moose efficiently from a long range away.
3) "MOOSEHANDLING PERFORMANCE": Defined as the ability of the dog 100 to keep moose in a relatively fixed position each time the dog 100 finds the moose and starts to bark at it. This measure is also affected by shooting opportunities the handler/observer 104/106 gets during the assessment as it correlates directly with the handling performance of the dog 100.

In an example embodiment, the one or more memories 200 and the computer program code 206 are configured to, with the one or more processors 212, cause the computing resource 112 to, in order to produce the assessment result 312 describing the performance of the dog 100 in hunting, analyse the dog information 306 and the observer information 308 for at least one of the following: search performance, game-finding performance, game-handling performance.

In an example embodiment, the assessment time may be defined to be maximum 240 minutes from the beginning of the dog's 100 first search round.

Based on the selected measures, the following four observation types 302 may be defined:
- "SEARCHROUND": indicates both start and end of a search round the dog 100 makes trying to find moose;
- "WORKING_WITH_GAME": Indicates the moment when the dog 100 finds a moose and starts barking at it;
- "SHOOTING_OPPORTUNITY": Indicates a successful shooting opportunity; and
- "END_OF_ASSESSMENT": Indicates the end of the assessment if assessment is ended before the maximum time.

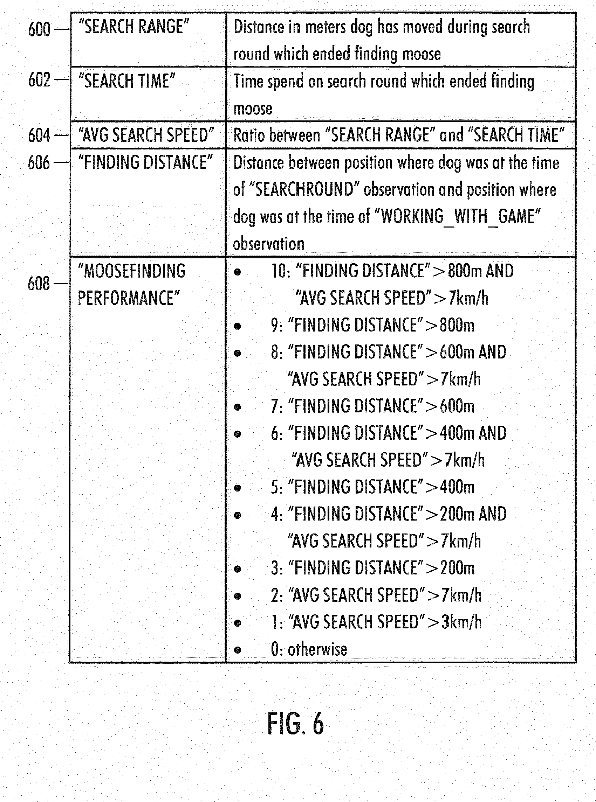

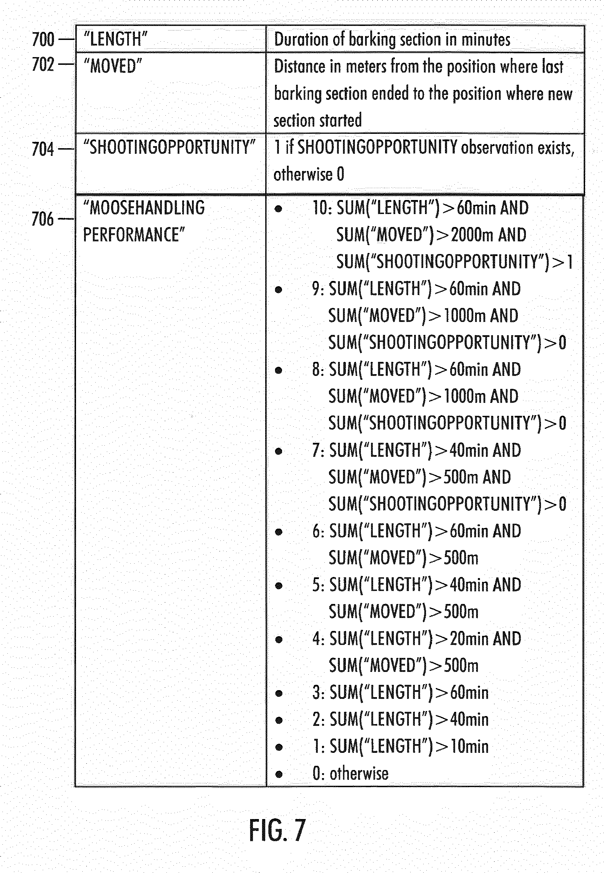

The assessment results 312 may be defined to contain "SEARCH PERFORMANCE" 506 as illustrated in Figure 5, "MOOSEFINDING PERFORMANCE" 608 as illustrated in Figure 6, and "MOOSEHANDLING PERFORMANCE" 706 as illustrated in Figure 7.

Search round is defined as a timeframe between two subsequent "SEARCHROUND" observations. For each search round, the following performance measures are calculated from the dog information 306 and listed:
- "SEARCH RANGE" 500: Distance in meters the dog 100 has moved during the search round;
- "SEARCH TIME" 502: Time spent on the search round;
- "AVG SEARCH SPEED" 504: Ratio between "SEARCH RANGE" 500 and "SEARCH TIME" 502; and
- "SEARCH PERFORMANCE" 506: Value is calculated according to the table by comparing "SEARCH RANGE" 500 and "AVG SEARCH SPEED" 504 to the thresholds. The value ranges from 10 to 0, 10 being the best and 0 being the worst.

Based on the data presented in Figure 5, the overall search performance of the dog 100 may be calculated as an aggregated average of individual "SEARCH PERFORMANCE" 506 measures of the search rounds.

In an example embodiment, the one or more memories 200 and the computer program code 206 are configured to, with the one or more processors 212, cause the computing resource 112 to, in order to produce the assessment result 312 describing the performance of the dog 100 in hunting, analyse the dog information 306 and the observer information 308 for search performance as follows:
- identify such observations that relate to search rounds, each search round having a start and a stop at specific observer timestamps;
- calculate for each search round a search time as the time the dog 100 spend on the search round by calculating the time between the start and stop of the specific observer timestamps;
- calculate for each search round a search range as a distance the dog 100 has moved during the search round by calculating the changes in geographical positions between tracker timestamps corresponding with the start and stop at the specific observer timestamps;
- calculate for each search round an average search speed by calculating a ratio between the search range and the search time; and
- produce the search performance for each search round by comparing the search range and the average search speed with a set of predetermined search thresholds.

To assess the performance of the dog 100 to find a moose efficiently from a long range away, the dog information 306 from the last "SEARCHROUND" observation to a "WORKING_WITH_GAME" observation is analysed.

As illustrated in Figure 6, "SEARCH RANGE" 600 is further defined as the distance in meters the dog 100 has moved during the search round which ended in finding the moose, "SEARCH TIME" 602 is defined as the time spend on the search round which ended in finding the moose, and "AVG SEARCH SPEED" 606 is the ratio between the two 600/602.

"FINDING DISTANCE" 606 is defined as the distance between the position where the dog 100 was at the time of the "SEARCHROUND" observation and the position where the dog 100 was at the time of the "WORKING_WITH_GAME" observation.

"MOOSEFINDING PERFORMANCE" 608 is calculated according to the table by comparing "FINDING DISTANCE" 606 and "AVG SEARCH SPEED" 604 to the thresholds.

In an example embodiment, the one or more memories 200 and the computer program code 206 are configured to, with the one or more processors 212, cause the computing resource 112 to, in order to produce the assessment result describing the performance of the dog in hunting, analyse the dog information 306 and the observer information 308 for game-finding performance as follows:
- identify such observations that relate to a game-finding search round, which ended in the dog 100 finding game, the game-finding search round having a start at a search round observation observer timestamp and stop at a working with game observation observer timestamp;
- calculate a search time as the time the dog 100 spend on the search round by calculating the time between the start and stop of the specific observer timestamps;
- calculate an average search speed by calculating the ratio between the search range and the search time;
- calculate a finding distance as a distance between the position where the dog 100 was at the time of the search round observation and the position where the dog 100 was at the time of the working with game observation by calculating the changes in geographical positions between tracker timestamps corresponding with the start and stop at the specific observer timestamps; and
- produce the game-finding performance by comparing the finding distance and the average search speed with a set of predetermined game-finding thresholds.

Barking sections are key elements to analyse moose handling performance of the dog 100. Barking sections are extracted from the dog information 306 between timeframe defined by "WORKING_WITH_GAME" and "END_OF_ASSESSMENT" observations 308. Barking sections may be extracted using the following rules 304: barking section starts when the dog 100 starts barking and ends when either the dog 100 ends barking (there is at least a two-minute break in the barking) or the dog 100 moves more than 100 meters in a minute. Barking may be analysed by having appropriate means in the tracking apparatus 102 for that such as a microphone and appropriate hardware and/or software for detecting various parameters (start, stop, frequency) relating to the barking. Finnish utility model 7430 illustrates one way of performing the barking analysis.

As illustrated in Figure 7, for each barking section, the following performance measures may be calculated and listed:
- "LENGTH" 700: Duration of the barking section in minutes;
- "MOVED" 702: Distance in meters between the position where the last barking section ended to the position where the new section started; and
- "SHOOTINGOPPORTUNITY" 704: 1 if SHOOTINGOPPORTUNITY observation exists, otherwise 0.

Based on the data presented in Figure 7, the moose handling performance of the dog 100 may now be presented as one generic value "MOOSEHANDLING PERFORMANCE" 706 between 0-10 by comparing the sums of parameters "LENGTH" 700, "MOVED" 702 and "SHOOTINGOPPORTUNITY" 704 as illustrated in Figure 7.

In an example embodiment, the dog information further includes a plurality of barking events timestamped with the tracker timestamps, and a plurality of speed readings timestamped with the tracker timestamps, and the dog information 306 includes an observation with an observation type of shooting opportunity.

In an example embodiment, the one or more memories 200 and the computer program code 206 are configured to, with the one or more processors 212, cause the computing resource 112 to, in order to produce the assessment result describing the performance of the dog in hunting, analyse the dog information 306 and the observer information 308 for game-handling performance as follows:
- identify such observations that relate to barking sections in the timeline between an observation having an observation type 302 determining that the dog 100 is working with the game and an observation having an observation type 302 determining that the assessment is ended, each barking section starting with a barking start event at a specific tracker timestamp and ending at a barking end event at a specific tracker timestamp or if the dog's 100 speed exceeds a predetermined speed threshold;
- calculate for each barking section a length as the time the dog 100 spend barking by calculating the time between the barking start event and the barking end event or the speed reading exceeding the predetermined speed threshold of the specific tracker timestamps;
- calculate a moved parameter for distances between the geographical positions where the previous barking section ended and the next barking section started; and
- produce the game-handling performance by comparing the length, the moved parameter and the number of the shooting opportunities with a set of predetermined game-handling thresholds.

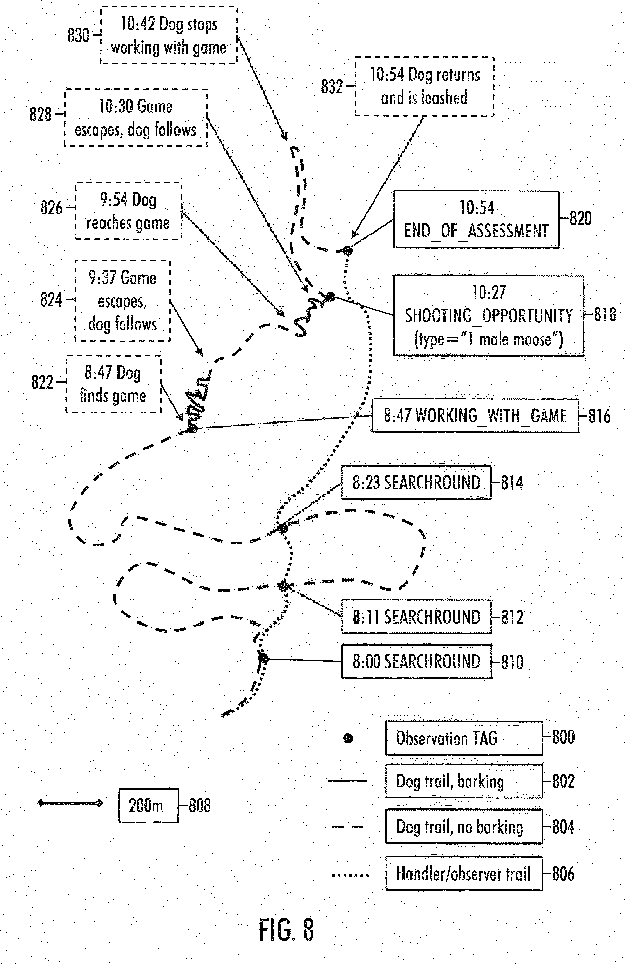

Next, with reference to Figures 8, 9, 10 and 11, a sample assessment with the assessment framework 300 presented above in connection with Figures 5, 6 and 7 is presented.

Note the scale 808 of Figure 8, and the markings: an observation TAG 800, a dog 100 trail with barking 802, a dog 100 trail with no barking 804, a handler/observer 104/106 trail 806. The contents of Figure 8 may be displayed with the user interface 114 coupled 140 with the computing resource 112 so that an assessor 116 may check 142 the assessment. The assessor 116 may be the same person as the observer 106, or another person, or a group of other persons, or a group of other persons but including the observer 106 as well.

The assessment starts at 8:00 as the dog handler 104 releases the dog 100 and the observer 106 makes a "SEARCHROUND"-type of observation 810 indicating that the dog 100 is on the loose. As this is the first observation, it also indicates the start of the assessment.

The dog 100 makes its first search round and returns to take contact with the assessment group (dog handler 104 and observer 106) at 8:11. This event is again recorded as another "SEARCHROUND" observation 812 by the observer 106. After taking contact at 8:11, the dog 100 starts a new search round. This second search round ends at 8:23, which is again recorded as a "SEARCHROUND"-type of observation 814.

Based on the data collected by the tracking apparatus 102 and the mobile apparatus 108, various performance statistics may be calculated by the computing resource 112 to assess performance of each search round: duration, distance, average speed, maximum and average distances from the start position, and shape of the search round. The shape of the search round may indicate whether the dog 100 searches game by going one direction and then returning back along its own track or whether the dog 100 searches game doing more or less circle-type of pattern. The shape of the search round may indicate the effectiveness of the search round. If the location of the dog handler 104 is available during the search round, the computing resource 112 may produce additional statistics including dog's 100 average and maximum distance from the dog handler 104 and the distance the dog handler 104 has moved during the search round.

The dog 100 starts its third search round and eventually finds 822 the game and starts barking at 8:47. After the dog handler 104 has confirmed that the dog 100 is really barking at moose (and not for example at birds etc.), the observer 106 records a "WORKING_WITH_GAME" observation 816.

Soon after the dog 100 started barking, the moose starts to move slowly towards north but the dog 100 follows and barks without interruption. At 9:37, barking suddenly ends and the moose escapes 824 to the northeast direction.

The dog 100 follows the moose and reaches 826 it again at 9:54 and starts barking. Again, the moose slowly moves to the northeast but the dog 100 follows and barks intensively. Assessment group silently moves towards the dog 100 and the observer 106 gets a shooting opportunity at 10:27. This event is recorded with "SHOOTING_OPPORTUNITY" observation 818 with an optional parameter describing the target game (type="1 male moose").

At 10:30, the moose escapes 828 and the dog 100 follows until 10:42, whereupon the dog 100 stops 830 working with the game. The dog 100 returns 832 and is leashed by the dog handler 104 at 10:54. The observer 106 records this event with an END_OF_ASSESSMENT observation 820.

Based on the generated data 306, 308 and the used assessment framework 300, the assessment results 312 are generated.

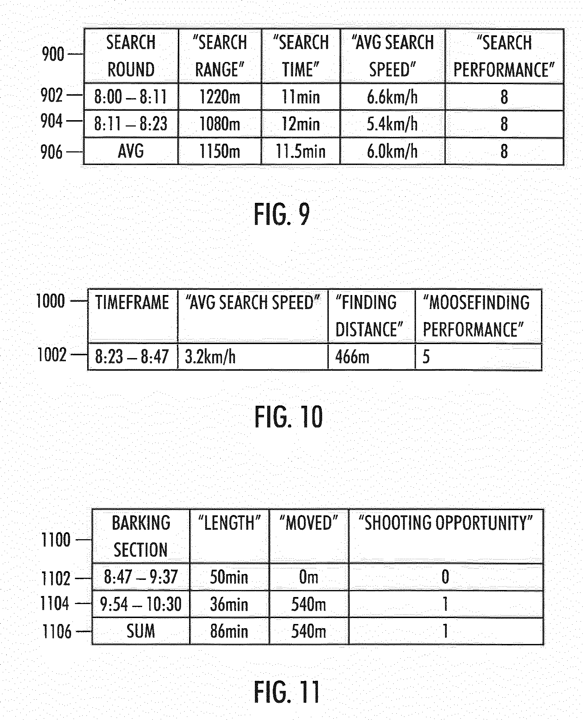

As shown in Figure 9, two search rounds 902, 904 and their parameters 900 are determined. Also the averages for each parameter are calculated 906. The overall search performance of the dog 100 in this assessment is 8 (=(8+8)/2).

As shown in Figure 10, the moose finding performance of the dog 100 in this assessment is 5, as the following rule 608 of Figure 6 is fulfilled for the parameters 1000 of the third search round 1002: "FINDING DISTANCE">400m (but "AVG_SEARCH_SPEED" is 6.0km/h, which is below the 7km/h limit of value 6).

As shown in Figure 11, two barking sections 1102, 1104 and their parameters 1100 are determined. Also the sums for each parameter are calculated 1106. The overall moose handling performance of the dog 100 in this assessment is 7, as the following rule 706 of Figure 7 is fulfilled: 7: SUM("LENGTH")>40min AND SUM("MOVED")>500m AND SUM("SHOOTINGOPPORTUNITY")>0.

It will be obvious to a person skilled in the art that, as technology advances, the inventive concept can be implemented in various ways. The invention and its embodiments are not limited to the example embodiments described above but may vary within the scope of the claims. Accordingly, even though the example embodiments deal with hunting dogs, the skilled person may apply the inventive concept to the assessment of other types of working dogs.

## Claims

1. A computing resource comprising
a data communication interface,
one or more processors, and
one or more memories including computer program code,
the one or more memories and the computer program code configured to, with the one or more processors, cause the computing resource at least to perform:
receive, from a tracking apparatus attachable to a dog, with the data communication interface, dog information gathered during an assessment of the dog, the dog information including a plurality of geographical positions of the tracking apparatus timestamped with tracker timestamps;
receive, from a mobile apparatus usable by a human observer, with the data communication interface, observer information inputted by the human observer during the assessment of the dog, the observer information including a plurality observations timestamped with observer timestamps, wherein the tracker timestamps and the observer timestamps are synchronized to a common chronological timeline; and
produce an assessment result by analysing the dog information and the observer information, the assessment result describing a working performance of the dog.

2. The computing resource of claim 1, wherein the observation includes an observation type selected from a set of predetermined observation types.

3. The computing resource of claim 2, wherein the one or more memories and the computer program code are further configured to, with the one or more processors, cause the computing resource further to perform:
in order to produce the assessment result, analyse the dog information and the observer information utilizing at least one rule selected from a set of predetermined rules on the basis of the observation type.

4. The computing resource of any preceding claim, wherein the one or more memories and the computer program code are further configured to, with the one or more processors, cause the computing resource further to perform:
in order to produce the assessment result describing the performance of the dog in hunting, analyse the dog information and the observer information for at least one of the following: search performance, game-finding performance, game-handling performance.

5. The computing resource of any preceding claim, wherein the one or more memories and the computer program code are further configured to, with the one or more processors, cause the computing resource further to perform:
in order to produce the assessment result describing the performance of the dog in hunting, analyse the dog information and the observer information for search performance as follows:
identify such observations that relate to search rounds, each search round having a start and a stop at specific observer timestamps;
calculate for each search round a search time as the time the dog spend on the search round by calculating the time between the start and stop of the specific observer timestamps;
calculate for each search round a search range as a distance the dog has moved during the search round by calculating the changes in geographical positions between tracker timestamps corresponding with the start and stop at the specific observer timestamps;
calculate for each search round an average search speed by calculating the ratio between the search range and the search time; and
produce the search performance for each search round by comparing the search range and the average search speed with a set of predetermined search thresholds.

6. The computing resource of any preceding claim, wherein the one or more memories and the computer program code are further configured to, with the one or more processors, cause the computing resource further to perform:
in order to produce the assessment result describing the performance of the dog in hunting, analyse the dog information and the observer information for game-finding performance as follows:
identify such observations that relate to a game-finding search round, which ended in the dog finding game, the game-finding search round having a start at a search round observation observer timestamp and stop at a working with game observation observer timestamp;
calculate a search time as the time the dog spend on the search round by calculating the time between the start and stop of the specific observer timestamps;
calculate an average search speed by calculating the ratio between the search range and the search time;
calculate a finding distance as a distance between the position where the dog was at the time of the search round observation and the position where the dog was at the time of the working with game observation by calculating the changes in geographical positions between tracker timestamps corresponding with the start and stop at the specific observer timestamps; and
produce the game-finding performance by comparing the finding distance and the average search speed with a set of predetermined game-finding thresholds.

7. The computing resource of any preceding claim, wherein the dog information further includes a plurality of barking events timestamped with the tracker timestamps, and a plurality of speed readings timestamped with the tracker timestamps, and the dog information includes an observation with an observation type of shooting opportunity.

8. The computing resource of claim 7, wherein the one or more memories and the computer program code are further configured to, with the one or more processors, cause the computing resource further to perform:
in order to produce the assessment result describing the performance of the dog in hunting, analyse the dog information and the observer information for game-handling performance as follows:
identify such observations that relate to barking sections in the timeline between an observation having an observation type determining that the dog is working with the game and an observation having an observation type determining that the assessment is ended, each barking section starting with a barking start event at a specific tracker timestamp and ending at a barking end event at a specific tracker timestamp or if the dog's speed exceeds a predetermined speed threshold;
calculate for each barking section a length as the time the dog spend barking by calculating the time between the barking start event and the barking end event or the speed reading exceeding the predetermined speed threshold of the specific tracker timestamps;
calculate a moved parameter for distances between the geographical positions where the previous barking section ended and the next barking section started; and
produce the game-handling performance by comparing the length, the moved parameter and the number of the shooting opportunities with a set of predetermined game-handling thresholds.

9. The computing resource of any preceding claim, wherein the dog comprises a hunting dog, and/or the tracking apparatus comprises a tracking collar, and/or the mobile apparatus comprises at least one of a mobile phone, a smartphone, a tablet computer, and a general-purpose mobile computing device, and/or the computing resource comprises at least one of a computer, a server computer, a cluster of computers, a computing cloud, a centralized computing resource, a distributed computing resource, and a part of the mobile apparatus.

10. The computer program code of any preceding claim 1 to 9 stored on a computer-readable medium, which computer program code, when executed on a computing resource, causes the computing resource to perform as described.

11. A method comprising:
receiving dog information gathered by a tracking apparatus attached to a dog during an assessment of the dog, the dog information including a plurality of geographical positions of the tracking apparatus timestamped with tracker timestamps;
receiving observer information inputted by a human observer into a mobile apparatus during the assessment of the dog, the observer information including a plurality observations timestamped with observer timestamps, wherein the tracker timestamps and the observer timestamps are synchronized to a common chronological timeline; and
producing an assessment result by analysing the dog information and the observer information, the assessment result describing a working performance of the dog.
